Europäisches Patentamt

European Patent Office

Office européen des brevets

(11) Publication number: **0 163 687**
**B1**

# EUROPEAN PATENT SPECIFICATION

(45) Date of publication of patent specification: **05.10.88**

(21) Application number: **84904207.2**

(22) Date of filing: **07.11.84**

(86) International application number:
**PCT/SE84/00377**

(87) International publication number:
**WO 85/02143 23.05.85 Gazette 85/12**

(51) Int. Cl.⁴: **B 29 C 33/40,** B 29 C 41/08,
B 63 B 5/24

(54) FORM FOR THE PRODUCTION OF BOAT HULLS, OR OTHER CONTAINERS, AND PARTS CONNECTED TO THE SAME.

(30) Priority: **11.11.83 SE 8306200**

(43) Date of publication of application:
**11.12.85 Bulletin 85/50**

(45) Publication of the grant of the patent:
**05.10.88 Bulletin 88/40**

(84) Designated Contracting States:
**AT BE CH DE FR GB LI LU NL SE**

(56) References cited:
**DE-A-2 425 208**
**FR-A-2 389 472**
**FR-A-2 447 793**
**SE-B- 300 877**
**SE-C- 182 478**

(73) Proprietor: **DUPRE-RISEN, Andrée Marie**
**P.O. Box 488**
**Port Barre Louisiana 70577 (US)**
(73) Proprietor: **RISEN, Kurt**
**P.O. Box 488**
**Port Barre Louisiana 70577 (US)**

(72) Inventor: **RISEN, Kurt**
**PI 2657**
**S-663 02 Hammarö (SE)**

(74) Representative: **Lautmann, Kurt O.**
**KURT LAUTMANNS PATENTBYRA AB Box 245**
**S-691 25 Karlskoga (SE)**

Courier Press, Leamington Spa, England.

## Description

The present invention relates to a female removable shell mold for the production of boat hulls. The female shell mold is to be coated with plastic material, such as glass fibre reinforced plastic, to constitute the boat hull.

Different ways of holding down the cost in the production of boat hulls have been sought by both do-it-yourself builders and manufacturers on an industrial scale. Thanks to production and sale of boats in different stages of construction, the boat builder can buy more or less complete hulls and by his own means provide the interior and motor, etc., thus reducing the cost somewhat. Forms for the production of boat hulls are also hired out to boat builders, but these forms are clumsy and often heavy and therefore must be braced in a suitable manner when used. It is true that the cost for the production of the hull itself is held down, but the clumsiness of the forms make them difficult to move, for which reason the boat builder must travel to the form in question and not the contrary. Owing to this, costs arise for, among other things, transport of materials, personnel and the completed hull, as well as food and lodging for personnel. In addition, there arise costs for hiring a mobile crane for the removal of the completed hull. From the French patent 2 447 793 it is known to use a thin shell on the outside of which a plastic layer is applied.

It is the purpose of the present invention to provide a simple and inexpensive form for the production of boat hulls, whereby the above-mentioned problems are solved. This is practically achieved according to the present invention by a female removable shell mold for forming a boat hull by application of a plastic composition on the inside of said shell mold, wherein said shell mold is self-supporting and non-reusable and consists of a hard plastic of 0,1 to 5 mm thick or a foamed plastic of 5 to 50 mm thick so that the mold shell can be removed from the molded boat hull.

The inside of the shell is to be spray-coated with plastic material—for example, glass fibre reinforced plastic—or it may be coated with glass fibre fabric and plastic with the help of a roller, for the formation of the hull. By applying the plastic to the inside of the shell, the need for sanding and puttying is reduced. The plastic coating can preferably be made on the shell when it is placed upside down or mounted on a base. Since the form is a thin shell, handling is easier and less expensive. Further simplification of handling is obtained when the shell is produced in parts which can be assembled at the time of use. Assembly is accomplished with self-locking parts, glue, tape or flanges or loose T-joints which are to be glued or which are provided with quick-coupling, in which case the flanges or T-joints can be shaped as housing, or in some other suitable manner. A large number of shells or shell parts can be transported and/or stored one within another. For example, 10 shells can, according to the present invention, be contained in the same amount of space as a completed hull. The shell is in itself an independent entity without need of braces, but it can, if it is appropriate, be provided with reinforcements in connection with mounting prior to use. The thin shell is designed as a non-reusable form which can be mass-produced and can be removed after use.

According to the present invention, the shell has been conceived in order to solve the problem of heavy, clumsy forms for the production of boat hulls. Those advantages gained by the use of said shell can even be utilized in the production of containers other than boat hulls.

The present invention will be described in greater detail in connection with the two enclosed drawings, where

Fig. 1 shows schematically a thin shell according to the present invention,

Fig. 2 shows a thin shell in parts,

Fig. 3 shows the shell parts according to Fig. 2 stacked together,

Figs. 4A—4F show joints of the shell parts,

Fig. 5 shows flange or T-joint shaped as housing,

Fig. 6A—6B show internal coating with plastic material forming the boat hull.

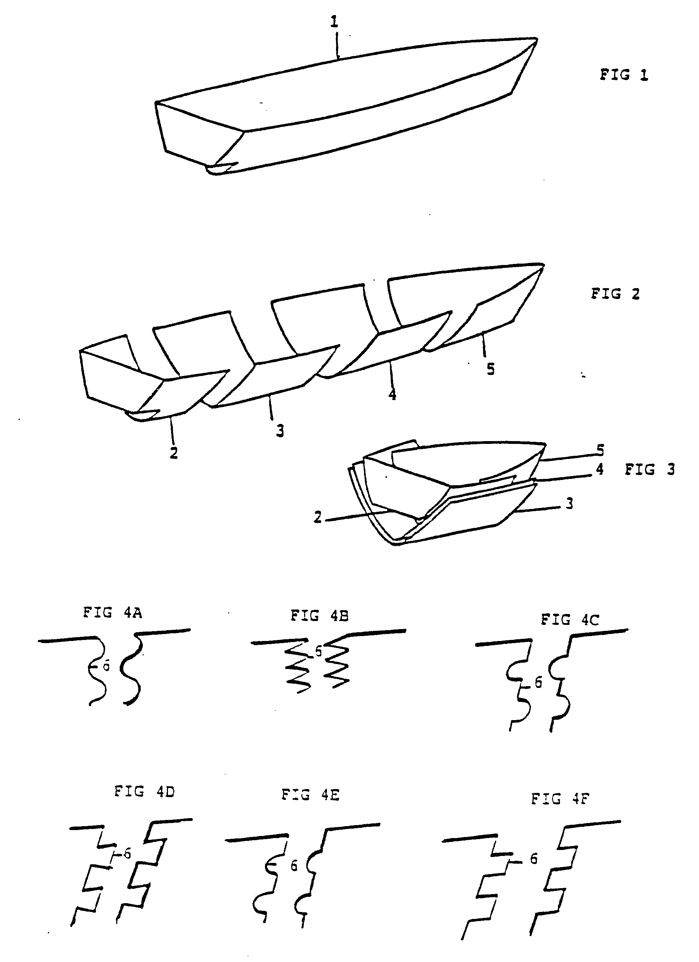

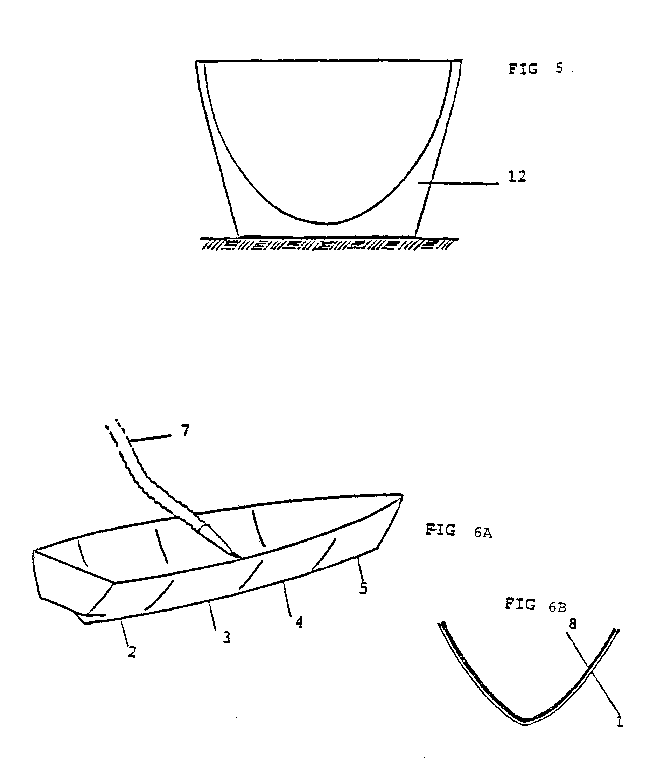

Fig. 1 shows a thin plastic shell 1 according to the invention. In Fig. 2 is shown schematically a division of the shell 1 into parts 2—5, which can be stacked in each other such as is shown in Fig. 3. In Figs. 4A—4F are shown examples of shapes of self-locking joints 6 in the shell parts 2—5. Flanges 9 and 10 can be so designed that these, after the shell parts are joined, form a supporting unit 12 according to Fig. 5. The boat hull is formed by the application to the shell 1 of the plastic material 8, which is applied by means of a spray nozzle 7 to the inside as shown in Figs. 6A and 6B.

The shell, which should be coated preferably with glass fibre reinforced plastic for the formation of the boat hull, consists, according to the given example, of a thin, rigid plastic or of foamed plastic divided into stackable parts 2—5. By this means is obtained an inexpensive and easily handled form which is lightweight and not very bulky, whereby necessary transports can be made easier and cheaper. The shell parts 2—5, which are furnished with self-locking joints 6, are easily assembled at the working site. The assembled shell 1 is to be coated by means of a spray nozzle 7 internally, with glass fibre reinforced plastic 8. The coating is to be continued until the desired strength and rigidity is obtained in the hull. After hardening, the shell 1 is removed from the constituted hull.

The shell according to the present invention has with reference to the drawings been described for the production of boat forms; but, of course, the present invention is even applicable in the production of other containers and the like. Examples of this are swimming pools or silos for solid and liquid products.

## Claims

1. A female removable shell mold for forming a boat hull by application of a plastic composition on the inside of said shell mold, wherein said shell mold is self-supporting and non-reusable and consists essentially of a hard plastic of 0,1 to 5 mm thick, or a foamed plastic of 5 to 50 mm thick so that the mold shell can be removed from the molded boat hull.

2. A female shell mold according to Claim 1, wherein said shell mold comprises several sections which are joined together.

3. A female shell mold according to Claim 2, wherein said shell mold sections are joined together by self-locking joints, a portion of which are provided in each shell mold section.

4. A female shell mold according to Claim 2, wherein said shell mold sections are joined together by flanges provided on each shell mold section.

5. A female shell mold according to Claim 4, wherein said flanges are joined together with glue.

## Patentansprüche

1. Eine eingelassene, abnehmbare Formmaske zum Formen eines Bootskörpers durch Aufbringen eines Kunststoffgemisches an der Innenseite der besagten Formmaske, wobei die erwähnte Formmaske selbsttragend und nicht wiederverwendbar ist und im wesentlichen aus einem harten Kunststoff von 0,1 bis 5 mm Dicke oder einem Schaumkunststoff von 5 bis 50 mm Dicke besteht, damit die Formmaske vom geformten Bootskörper abgenommen werden kann.

2. Eine eingelassene Formmaske nach Patentanspruch 1, wobei die erwähnte Formmaske mehrere, miteinander verbundene Sektionen enthält.

3. Eine eingelassene Formmaske nach Patentanspruch 2, wobei die genannten Formmaskensektionen durch selsbtsichernde Verbindungen in einer Anzahl miteinander verbunden sind, mit der jede Formmaskensektion ausgestattet ist.

4. Eine eingelassene Formmaske nach Patentanspruch 2, wobei die Formmaskensektionen durch Flansche miteinander verbunden sind, womit jede Formmaskensektion bestückt ist.

5. Eine eingelassene Formmaske nach Patentanspruch 4, wobei die erwähnten Flansche mit Klebstoff miteinander verbunden sind.

## Revendications

1. Moule-coquille femelle détachable pour le moulage d'une carène de navire par application d'une composition plastique à l'intérieur dudit moule-coquille, où ledit moule-coquille est indépendant et non réutilisable et constitué essentiellement par du plastique dur d'une épaisseur de 0,1 à 5 mm ou par du plastique mousse d'une épaisseur de 5 à 50 mm, de manière que le moule-coquille puisse être détaché de la carène de navire moulée.

2. Moule-coquille femelle selon la revendication 1, où ledit moule-coquille se compose de plusieurs sections assemblées entre elles.

3. Moule-coquille femelle selon la revendication 2, où les sections dudit moule-coquille son assemblées par des joints auto-bloqueurs dont une partie est ménagée sur chaque section du moule-coquille.

4. Moule-coquille femelle selon la revendication 2, où lesdites sections du moule-coquille sont assemblées au moyen de brides ménagées sur chaque section du moule-coquille.

5. Moule-coquille femelle selon la revendication 4, où lesdites brides sont assemblées par collage.

FIG 1

FIG 2

FIG 3

FIG 4A

FIG 4B

FIG 4C

FIG 4D

FIG 4E

FIG 4F

0 163 687

FIG 5.

12

FIG 6A

7

5

4

3

2

FIG 6B

8

1